# EUROPEAN PATENT APPLICATION

(11) **EP 3 835 851 A1**
(43) Date of publication of application: **16.06.2021**
(21) Application number: 19306618.0
(22) Date of filing: 10.12.2019
(51) Int. Cl.: G02B 30/27, B42D 25/30, G02B 30/56, G02B 3/00

(54) **LASER ENGRAVABLE FLOATING IMAGE FOR SECURITY LAMINATES**

(71) Applicant: THALES DIS FRANCE SA, 92190 Meudon (FR)
(72) Inventor: POHJOLA, Teemu, 92190 MEUDON (FR)
(74) Representative: Lotaut, Yacine Diaw

(57) **Abstract**

A transparent microlens sheeting, a security article including a microlens sheeting, and method for producing a security article having a transparent microlens sheeting. The microlens sheeting has a layer of microlenses, the layer having a first broad face and a second broad face, and containing a first microlens array (107) and a second microlens array (109) on the first broad face of the layer of microlenses, wherein the first microlens array has a focal plane essentially coplanar to the second broad face and the second microlens array has a focal plane that lies beyond the layer of microlenses. The microlens sheeting further contains a first microimage array comprising a plurality of individual at least partially complete images (111) located on the second broad face of the microlens layer and associated with each of a plurality of the microlenses of said first microlens array, whereby a composite image, provided by the individual images, appears to the unaided eye to be floating above or below the sheeting, or both when the first microimage array is viewed through first microlens array.

## Description

### BACKGROUND OF THE INVENTION

The present invention relates generally to security articles, and more particularly to a microlens sheeting having microlens arrays of different focal planes and security articles containing such multi-focal-length microlens sheeting.

A security article is an item which requires a form of protection against counterfeiting. For simple documents, a counterfeit may be made from scratch by duplicating an authentic document including any security features of thereof. Alternatively, an attacker may attempt to graphically alter personalized data on an authentic document or extract security features of an authentic document and using those security features on a counterfeit document.

In particular, cards to which personalization data is applied to the card surface and protected only by a security layer applied on top of the personalization data are quite vulnerable to forgery performed by removal of the security layer followed by alteration of the personalization data on the substrate. In a worst-case scenario, the security layer survives the removal and can be reapplied on top of the altered personalization data.

Protection elements of a security article can take several forms, e.g., an embedded chip, owner photograph, or signature to be duplicated on a credit card. A more advanced security article may be manufactured with the means to produce a black and white *integrated image,* sometimes referred to as a *composite image,* which is formed by combining a two-dimensional array of microlenses with well-registered high-resolution microimages located at the focal depth of the microlenses. The visual system of a person looking at the microimages, through the microlens array, integrates the microimages, which are magnified by the microlens array, generating a virtual image, known as an *integrated image.* By adjusting the apparent height or depth of the microimages, the integrated image can be made to appear to float above or below the surface of the security article as a security feature and is therefore sometimes referred to as a *floating image.* Such integrated images may, for example, be produced by laser engraving an array of microimages through a microlens array. This technology is described in co-assigned U.S. Pat. Publ. 2013-0154250, "PERSONALIZED SECURITY ARTICLE AND METHODS OF AUTHENTICATING A SECURITY ARTICLE AND VERIFYING A BEARER OF A SECURITY ARTICLE" to Dunn et al.

The addition of color floating images to security documents is further described in US. Pat. Publ. US 2015-0053341 A1, "PROCESSING TAPES FOR PREPARING LAMINATE ARTICLES" to Kui Chen-Ho et al. (abandoned), U.S. Pat. No. 9,289,962, "LASER-PERSONALIZABLE SECURITY ARTICLES" to Kui Chen-Ho et al., and U.S. Pat. No. 10,017,001, "LASER-PERSONALIZABLE SECURITY ARTICLES" to Kui Chen-Ho et al.

The integral image technology of Rolling Optics AB, Solna, Sweden, provides another approach for associating composite floating images to many types of products including security documents. In the Rolling Optics approach a high-accuracy microimage array is printed on a surface of a foil on which a corresponding microlens array is produced on the opposite surface. The microimage array and the microlens array are made to have common pitch and skew angles.

The above-described composite floating images enhance the security of security documents in which they are embedded. Authentication of a document may be achieved. For example, while three-dimensional floating composite images may be readily viewed by a human observer through the microlenses, thus revealing a recognizable logo or an identification of a user, the images are virtually impossible to copy or falsify.

Furthermore, the microimage array is typically located on a layer in the interior of a security document, for example, below a cover layer, a lens layer, and perhaps one or more intermediate layers. These layers may be permanently laminated to one another using a variety of adhesives as well as heat and pressure. Thus, access to the microimage array becomes difficult and attempts at tampering is likely evident in that attempts at delaminating the security document would damage or destroy parts of the document.

However, the tamper-resistance of a security document with multiple floating images is reduced by the fact that the focal plane of the microlenses found in a microlens sheeting may all be produced by microimages located within one layer of the security document. Thus, if a person skilled in the art of disassembling multi-layer security documents succeeds at removing that one layer, that person may have some chance at reusing that layer in a counterfeit document.

From the foregoing it is apparent that there is a need for security documents that are even more tamper resistant.

### SUMMARY

A transparent microlens sheeting, which may be used in a method to produce a security article, and included in a security article has a layer of microlenses, the transparent sheeting has a first broad face and a second broad face, and containing a first microlens array and a second microlens array on the first broad face, wherein the first microlens array has a focal plane essentially coplanar to the second broad face and the second microlens array has a focal plane that lies beyond the transparent sheeting; and a first microimage array comprising a plurality of individual at least partially complete images located on the second broad face of the transparent sheeting and associated with each of a plurality of the microlenses of said first microlens array, whereby a composite image, provided by the individual images, appears to the unaided eye to be floating above or below the sheeting, or both when the first microimage array is viewed through first microlens array.

In an aspect, the focal plane of the second microlens array lies between 50µ up to 900µ beyond the layer of microlenses.

In an aspect, the first microimage array is printed on the second surface of the microlens layer aligned with the first microlens array.

In a further aspect, the transparent microlens sheeting has at least one additional security element on the second surface of the microlens layer, the additional security element being a diffractive security element or a printed security element. The additional security element may be contained in an additional material layer of the microlens sheeting and maybe located internal to the microlens sheeting in such an additional layer.

In a further aspect, the transparent microlens sheeting includes an adhesive layer located on the second broad face whereby the sheeting may be adhered to a substrate.

In a further aspect, the first microlens array covers a first portion of the first broad face of the layer of microlenses and the second microlens array covers all other areas of the first broad face of the layer of microlenses.

In a further aspect, a method for producing a security article includes the steps of placing an above-described microlens sheeting on a substrate and laser engraving a second microimage array through the second microlens array onto the radiation sensitive material such that the second microimage array comprises a plurality of individual at least partially complete images located on the second focal plane and associated with each of a plurality of the microlenses of said second microlens array, whereby a second composite image, provided by the individual images of the second microimage array, appears to the unaided eye to be floating above or below the sheeting, or both when the second microimage array is viewed through the second microlens array.

In a further aspect, the substrate contains a transparent window and the step of placing the transparent microlens sheeting on the substrate comprises placing the second microlens array over the transparent window and wherein the focal plane of the second microlens array lies between 50µ and 900µ beyond the layer of microlenses.

To achieve those and other advantages, and in accordance with the purpose of the invention as embodied and broadly described, the invention proposes a transparent microlens sheeting, comprising:
at least one transparent layer collectively forming a stack of layers having a first broad face and a second broad face opposite to the first broad face located on a bottom layer of the stack of layers, the stack of layers comprising one or more layers including:
a first transparent layer being a layer of microlenses;
the layer of microlenses located on the first broad face of the transparent microlens sheeting and containing a first microlens array and a second microlens array on the first broad face of the transparent microlens sheeting, wherein the first microlens array has a focal plane essentially coplanar to the second broad face and the second microlens array has a focal plane that lies beyond the transparent microlens sheeting; and
a first microimage array comprising a plurality of individual at least partially complete images located on the second broad face of the transparent microlens sheeting and associated with each of a plurality of the microlenses of said first microlens array, whereby a composite image, provided by the individual images, appears to the unaided eye to be floating above or below the sheeting, or both when the first microimage array is viewed through first microlens array.

According to some embodiments, the transparent microlens sheeting contains one layer and the microlens layer and the bottom layer are the same layer.

According to some embodiments, the focal plane of the second microlens array lies at least 50µ beyond the layer of microlenses.

According to some embodiments, the focal plane of the second microlens array lies up to 900µ beyond the layer of microlenses.

According to some embodiments, the first microimage array is printed on the second surface of the microlens layer aligned with the first microlens array.

According to some embodiments, the transparent microlens sheeting further comprising at least one additional security element on said second surface of the microlens layer, the additional security element being a diffractive security element or a printed security element.

According to some embodiments, the transparent microlens sheeting further comprising at least one additional material layer having a surface proximal to the microlens layer, a surface distal to the microlens layer, and containing at least one security element.

According to some embodiments, at least one security element is a diffractive security element located on a proximal surface of a microlens layer or located on a distal surface of a first of said at least one additional material layer adjacent to the proximal surface of a second of said at least one additional material layers thereby locating said diffractive security element internal to said microlens sheeting.

According to some embodiments, at least one security element is a printed security element located on a proximal surface of a microlens layer or located on a distal surface of a first of said at least one additional material layer adjacent to the proximal surface of a second of said at least one additional material layers thereby locating said printed security element internal to said microlens sheeting.

According to some embodiments, the transparent microlens sheeting further comprising an adhesive layer located on the second broad face whereby the sheeting may be adhered to a substrate.

According to some embodiments, the first microlens array covers a first portion of the first broad face of the layer of microlenses and the second microlens array covers all other areas of the first broad face of the layer of microlenses.

The present invention also relates to a method for producing a security article, the method comprising:
printing personalization information on a substrate having a top surface and at least one radiation sensitive layer located within the substrate;
placing a transparent microlens sheeting on the substrate such that a second broad face of the microlens layer is located proximate to a top surface of the substrate, wherein the transparent microlens sheeting has:
   at least one transparent layer collectively forming a stack of layers having a first broad face and a second broad face opposite to the first broad face and located on a bottom layer of the stack of layers, the stack of layers comprising one or more layers including:
   a first transparent layer being a layer of microlenses;
   the layer of microlenses located on the first broad face of the transparent microlens sheeting and containing a first microlens array and a second microlens array on the first broad face of the transparent microlens sheeting, wherein the first microlens array has a focal plane essentially coplanar to the second broad face and the second microlens array has a focal plane that lies beyond the transparent microlens sheeting; and
   a first microimage array comprising a plurality of individual at least partially complete images located on the second broad face of the transparent microlens sheeting and associated with each of a plurality of the microlenses of said first microlens array, whereby a composite image, provided by the individual images, appears to the unaided eye to be floating above or below the sheeting, or both when the first microimage array is viewed through first microlens array; and
laser engraving a second microimage array through the second microlens array onto the radiation sensitive material such that the second microimage array comprises a plurality of individual at least partially complete images located on the second focal plane and associated with each of a plurality of the microlenses of said second microlens array, whereby a second composite image, provided by the individual images of the second microimage array, appears to the unaided eye to be floating above or below the sheeting, or both when the second microimage array is viewed through the second microlens array.

According to some embodiments, the focal plane of the second microlens array lies at least 50µ beyond the layer of microlenses.

According to some embodiments, the focal plane of the second microlens array lies up to 900µ beyond the layer of microlenses.

According to some embodiments, the substrate contains a transparent window and the step of placing the transparent microlens sheeting on the substrate comprises placing the second microlens array over the transparent window and wherein the focal plane of the second microlens array lies between 50µ and 900µ beyond the layer of microlenses.

According to some embodiments, the substrate is opaque and wherein the focal plane of the second microlens array lies between 50µ and 300µ beyond the layer of microlenses.

According to some embodiments, the step of placing the first microimage under the first portion of the translucent layer precedes placing the first translucent microlens layer over the substrate and is performed by microprinting the first microimage array on a first broad face of the translucent layer.

According to some embodiments, the step of placing the first microimage under the first portion of the translucent layer follows placing the first translucent layer over the substrate and is performed by laser engraving the first microimage array on the bottom broad face of the translucent layer through the first microlens array.

The present invention also relates to a security article, comprising:
a first translucent layer having a top surface and a bottom surface, the first translucent layer laminated together with at least one other layer including a substrate, the first translucent layer having, located on the top surface:
a first microlens array having a first focal plane substantially equal to the bottom surface;
a second microlens array having a second focal plane located within the at least one other layer;
a first microimage array placed on the bottom surface; and
a second microimage array placed in the at least one other layer at said second focal plane.

According to some embodiments, the first microimage array is microprinted onto the bottom surface of the translucent layer.

According to some embodiments, the first microimage array is laser engraved onto the bottom surface of the translucent layer through the first microlens array.

According to some embodiments, the security article comprising at least one other material layer between the substrate and the translucent microlens layer wherein second microimage array is laser engraved in the at least one other layer through the second lens array.

### BRIEF DESCRIPTION OF THE DRAWINGS

FIG. 1 is cross-sectional view of a microlens sheeting that may be placed or formed on a substrate to form a security document.
FIG. 2 is a graphical schematic representation of reflected light from a microlens sheeting placed over a microimage array containing microimages organized in an array.
FIG. 3 is a planview of a microimage array consisting of a plurality of sample microimages.
FIG. 4 is a perspective view of a section of a microlens sheeting containing a microlens array consisting of a plurality of microlenses placed over the patch.
FIG. 5 is a schematic illustration of a plan view of a microlens sheeting having a first microlens array and a second microlens array.
FIG. 6 is a process-flow diagram illustrating the steps in making a security document using the microlens sheeting of FIG. 5 and containing at least two microimage arrays that produce different composite images.
FIG. 7 is a cross-section view of an example substrate for a security document.
FIG. 8 is a cross section view of the security document of produced by the process of FIG. 6.
FIG. 9 is an exaggerated view of the cross-section view of a security document produced using the procedure of FIG. 6, illustrating the difference in focal length of lenses of the first microlens array and the second microlens array.
FIG. 10 is a schematic illustration of one embodiment of a security document, namely, a passport booklet, corresponding to security document of the FIGs. 1-9.
FIGs. 11 and 12 provide a planview and a cross-section view of an alternative embodiment security article wherein the microlens arrays extend over the entire microlens array layer.
FIG. 13 is a cross-section view of an alternative embodiment security article having a substrate with a transparent window.

### DETAILED DESCRIPTION OF THE INVENTION

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. In addition, it is to be understood that the location or arrangement of individual elements within each disclosed embodiment may be modified without departing from the spirit and scope of the invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

The herein described technology provides a microlens sheeting that includes at least one array of microimages one side of the sheeting and at least two arrays of microlenses on the opposite side of the sheeting and a security product constructed using such microlens sheeting. The array of microimages corresponds to a first of the arrays of microlenses and is placed beneath the first microimage array. The microimage array, when viewed through a corresponding microlens array, produces an integrated floating image, e.g., such as composite images described in U.S. Pat. No. 7,336,422, "SHEETING WITH COMPOSITE IMAGE THAT FLOATS," to Dunn et al. (incorporated herein by reference) or other composite images such as those with a moire effect such as described in U.S. Pat. No. 8,009,360, "MICRO-OPTIC SECURITY AND IMAGE PRESENTATION SYSTEM PRESENTING A SYNTHETIC MAGNIFIED IMAGE THAT APPEARS TO LIE ABOVE A GIVEN PLANE" to Steenblik et al. and U.S. Pat. No. 7,468,842, "IMAGE PRESENTATION AND MICRO-OPTIC SECURITY SYSTEM," to Steenblik et al. (both incorporated herein by reference). The microimage array may be printed onto the bottom surface of the microlens sheeting or may be separately produced using high-definition printing techniques and attached to the microlens sheeting. The sheeting may then be placed on a substrate of a security article which may have been personalized prior to the placement of the sheeting thereon. Further personalization, in the form of laser engraving through the second microlens array may be performed after the microlens sheeting has been applied to the substrate thereby producing a second floating image that may include personalization information.

A composite image is an image that is only created by the visual system of an observer when combining an array of microlenses with an array of microimages. If the array of microimages has a repeat pattern with a specific pitch that is typically a specific ratio to the lens pitch or if they have the same pitch but have a particular rotational skew or misalignment, a *moiré effect* is generated, e.g., the corresponding composite image is a magnification of the individual microimages. On the other hand, if the microimages in the microimage array are each unique with a pitch that matches that of the microlenses, the produced composite image is an integrated image or floating image.

The composite image produced by viewing the microimage array through a corresponding microlens array may correspond to an *original image,* which is used to calculate a microimage file containing the microimage array. Each individual microimage may be a complete representation of the original image. Such microimages are referred to herein as *full* microimages. On the other hand, the microimages may be a representation of a subset of the original image. Such microimages are referred to herein as *partial* microimages.

Integrated images are produced when an array of partial microimages is viewed through a corresponding array of microlenses located on a sheeting of microlenses. In an embodiment, the sheeting of microlensesa microimage array, and a substrate are laminated to form a structure such that individual microlenses are associated with each microimage of the array of microimages located on the backside of the microlens sheeting. When the microimages are viewed through the microlens sheeting, the integrated image that is formed in observation appears to be suspended, and can appear to float above, within the plane of, or below the sheeting, or further any combination of perceived levels thereof. The possible suspended integrated images are referred to collectively for convenience as floating images, and they can be located above or below the sheeting (either as two or three-dimensional images) or can be a three-dimensional image that appears above, in the plane of, and below the sheeting. The integrated images can be in black or in grayscale or in color and can appear to move as the viewing angle of the image is changed. Unlike some holographic sheetings, imaged sheeting of the present invention cannot be used to create a replica of itself by capturing the image produced through the microlenses. Additionally, the floating image(s) can be observed by a viewer with the unaided eye.

In alternative embodiments, the security feature of the microimage array in combination with the microlens array produces a moire effect. A moire effect is produced from overlaying repeating patterns in a microimage array. In an embodiment, a moire base layer is printed on the backside of the microlens sheeting. When the moire base layer is viewed through the microlens array, a moire effect is produced.

The microimages or a moire pattern may be printed onto the microlens sheeting prior to lamination during a manufacturing phase, i.e., before personalization. Thus, the produced images, whether integrated images produced from microimages or a moire effect, are advantageously used for displaying government seals, company logos, trademarks, or other images associated with the various security documents of many individuals. However, other fields of the security document may be useful for personalization information, e.g., biographical information of the bearer of the security document.

In one embodiment the second microlens array may be used to create additional markings on polycarbonate layers of the security document by laser engraving the polycarbonate layer through the second microlens array, e.g., using methods described in co-assigned patent application U.S. Pat. Publ. 2013-0154250, "PERSONALIZED SECURITY ARTICLE AND METHODS OF AUTHENTICATING A SECURITY ARTICLE AND VERIFYING A BEARER OF A SECURITY ARTICLE," to Dunn et al., the entire disclosure of which is hereby incorporated by reference. Such markings may produce laser engraved floating images (LEFI) and may be used to personalize the security document to include personal biometric or biographical information of the bearer of the security document.

Examples of security articles include identification documents and value documents. The term identification documents is broadly defined and is intended to include, but not be limited to, for example, passports, driver's licenses, national ID cards, social security cards, voter registration and/or identification cards, birth certificates, law enforcement ID cards, border crossing cards, security clearance badges, security cards, visas, immigration documentation and cards, gun permits, membership cards, and employee badges. The security articles discussed herein may be an identification document itself or may be a part of the identification document. Other security articles may be described as value documents, and typically include items of value, typically monetary value, such as currency, bank notes, checks, phone cards, stored value cards, debit cards, money orders, credit cards, gift certificates and cards, and stock certificates, where authenticity of the item is important to protect against counterfeiting or fraud.

Some desirable features for security articles discussed in this invention include ready authentication and resistance to simulating, altering, copying, counterfeiting and tampering. Ready authentication can be achieved through the use of indicia that are readily apparent and checked, and yet is difficult to copy or falsify. Examples of such indicia include floating images in sheeting where the image appears to be above, below, or within the plane of the sheeting, or some combination thereof. Such images are difficult to counterfeit, simulate, or copy because the image is not readily reproduced by straightforward methods such as photocopying or photography. Examples of such images include, for example, three-dimensional floating images present in some state driver's licenses where a series of three-dimensional floating images representing the state name or other logo are present across the license card to verify that the card is an official license and not a counterfeit. Such three-dimensional floating images are readily seen and verified.

The sheeting's composite image as described may be used in a variety of applications such as securing tamperproof images in passports, ID badges, event passes, affinity cards, product identification formats, currency, and advertising promotions for verification and authenticity, brand enhancement images which provide a floating or sinking or a floating and sinking image of the brand, identification presentation images in graphics applications such as emblems for police, fire or other emergency vehicles; information presentation images in graphics applications such as kiosks, night signs and automotive dashboard displays; and novelty enhancement through the use of composite images on products such as business cards, hang-tags, art, shoes and bottled products.

As tampering and counterfeiting of identification and value documents increases, there is a need for increased security features. The security feature of the present disclosure provides enhanced security to security articles.

The personalized security article of the present invention having vivid high-definition floating images provides enhanced authentication and verification abilities, as well as enhanced resistance to simulating, altering, copying, counterfeiting or tampering. The security article of this invention also may be created at the point of issuance to the bearer of the security article which enhances security. All of these qualities provide unique security capabilities in a security article.

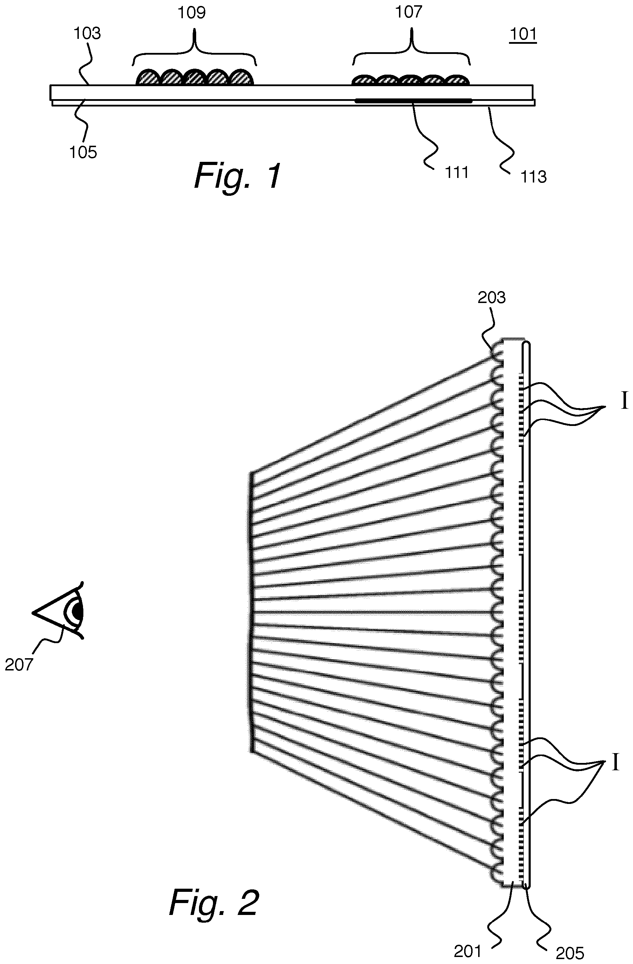

FIG. 1 is an enlarged cross-sectional view of a a microlens sheeting 101 that may be placed or formed on a substrate to form a security document. This sheeting 101 comprises a transparent plano-convex or aspheric base sheet having first and second broad faces, the first face 103 contains two arrays of substantially hemi-spheroidal or hemi-aspheroidal microlenses 107 and 109 and the second face 105 is substantially planar. The focal lengths of the lenses of the two microlens arrays 107 and 109 focus on different focal planes, respectively. The shape of the microlenses of the first microlens array 107 and thickness of the base sheet are selected such that the focal plane of the first microlens array 107 is approximately at the second face 105. Accordingly, a first microimage array 111, which is located, e.g., by micro printing, on the second broad face 105 of the microlens sheeting 101. The shape of the lenses of the second microlens array, on the other hand, is selected such that the focal plane of the second microlens array 109 lies beyond the microlens sheeting layer 101 and as discussed hereinbelow, lies on or within a substrate to which the microlens sheeting layer 101 is adhered. In an embodiment, the second broad face 105 of the microlens sheeting 101 is coated with an adhesive layer 113 to facilitate adhering the microlens sheeting to a substrate.

Microlenses with a uniform refractive index of between 1.5 and 3.0 over the visible and infrared wavelengths are most useful for producing integrated images as described herein and is selected such that the focal length of the microlens array corresponds to the distance between the microlenses 107 and a microimage array 111 placed on or adjacent to the second face 105. Suitable microlens materials will have minimal absorption of visible light, and in embodiments in which an energy source is used to image a radiation-sensitive layer the materials should exhibit minimal absorption of the energy source as well. The refractive power of the microlenses, whether discrete or replicated, and regardless of the material from which they are made, is preferably such that the light incident upon the refracting surface will refract and focus on the opposite side of the microlens. Typically, the light will be focused on a material adjacent to the microlens or on a material located below a transparent intermediate layer or layers.

Microlenses with diameters ranging from 15 micrometers to 275 micrometers are preferable, though other-sized microlenses may be used. Good composite image resolution can be obtained in one of two ways: 1) by using microlenses having diameters in the smaller end of the aforementioned range for composite images that are to appear to be spaced apart from the microsphere layer by a relatively short distance, or 2) by using larger microspheres for composite images that are to appear to be spaced apart from the microsphere layer by larger distances. Other microlenses, such as plano-convex, cylindrical, spherical or aspherical microlenses having lenslet dimensions comparable to those indicated above, can be expected to produce similar optical results.

The microimage array 111 is placed on the microlens layer 101, for example, by microprinting. The microimage array 111 may be placed as a separate layer adhered to second face 105 of the microlens layer 101, may be printed on a patch applied to the microlens layer 101 or printed directly on the second face 105 of the microlens layer 101, or laser engraved within a sublayer of the microlens layer. The microimage array 111 contains an array of partial microimages that form an integrated image when viewed through the first microlens array 107 of the microlens layer 101. In an alternative embodiment, the microlens array 111 contains a moire repeating base pattern that forms a moire effect when viewed through a microlens layer 101.

FIG. 2 is a graphical schematic representation of reflected light from a portion of a microlens sheeting 201 containing a microlens array 203 placed over a microimages organized in an array 205. The microlens array 203 of FIG. 2 corresponds to either the first or second microimage array 107 or 109 of FIG. 1. Similarly, the microimage array 205 corresponds to either the first microimage array 111 or a second microimage array 803 (discussed in greater detail hereinbelow). Conversely, the sheeting 201 corresponds to either microlens sheeting 101 alone or in combination with a substrate on which the sheeting 101 has been placed.

For integrated images, the microimages on the microimage array 205 on which an image I is printed are different for each microlens in the microlens layer 101 because each microlens refracts a different perspective to a viewer 207. Thus, each a unique image printed of the microimage array 205 is associated individually with a microlens of the microlens array by its angle of orientation to each microlens. It should be noted that there is not a strict one-to-one correspondence between microimages and microlenses; as the microlens sheeting may provide microlenses over a much larger area than the microimage array, there may be many microlenses with no corresponding microimage.

On the other hand, moire effects are produced as a result of repeat patterns that are produced when the microimages that are printed on the microimage array 205 are viewed through the microlens array 203.

Depending upon the size of the original image to be represented in an integrated image, a full or partial image of the original image is present in the microimage of the microimage array behind each microlens. The extent to which each original image is reproduced as an image behind a microlens depends on the relative position of the integrated image to the microlens. For a spatially extended original image, not all portions of the microlens array correspond to all parts of the integrated image. As a result, from those portions of the patch which do not contain a part or whole of the original image, only a partial image of the original image might appear behind the microspheres.

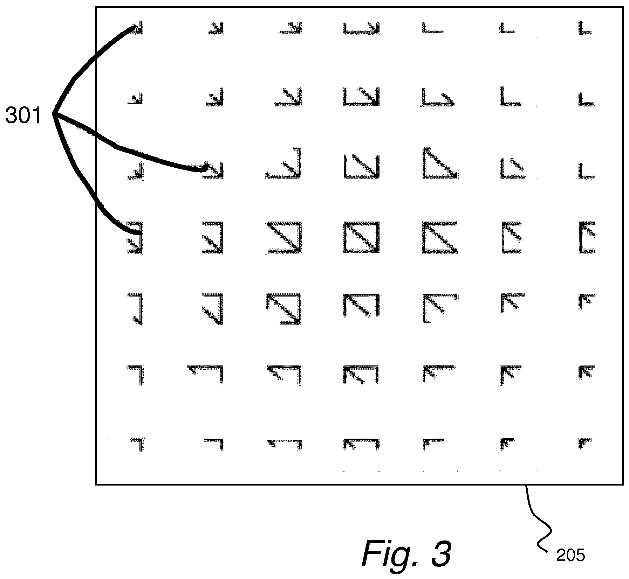

FIG. 3 is a planview of a microimage array 205 consisting of a plurality of sample microimages 301.

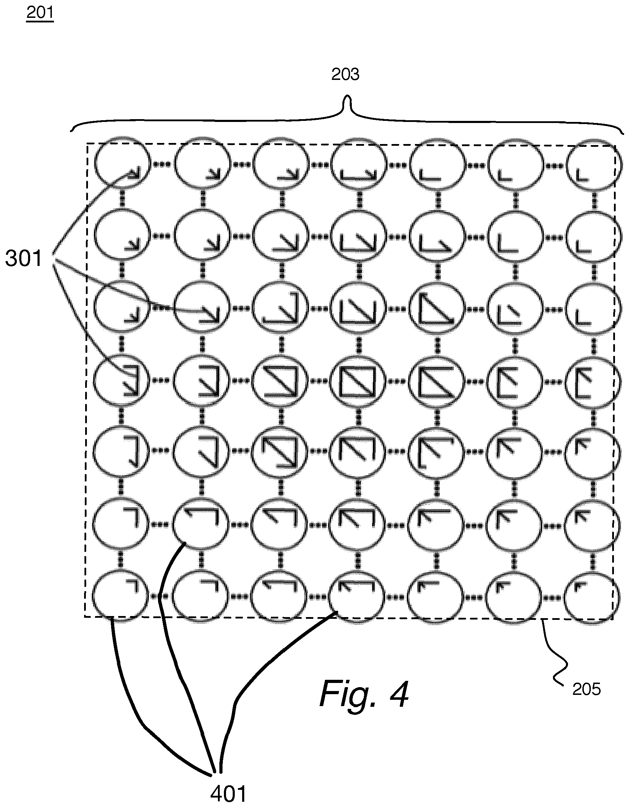

FIG. 4 is a perspective view of a section of a microlens sheeting 201 containing a microlens array 203 consisting of a plurality of microlenses 401 placed over the microimage array 205. FIG. 4 depicts the sample individual microimages 301, which may be partial or full images, and which are located in the microimage array 205 under individual microlenses 401 as viewed from the microlensed broad face of the sheeting 201, and further showing that the recorded images range from partial to complete replication of the original image.

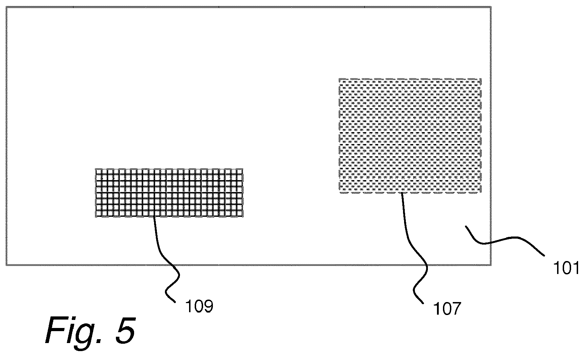

FIG. 5 is a schematic illustration of a plan view of a microlens sheeting 101 having a first microlens array 107 and a second microlens array 109.

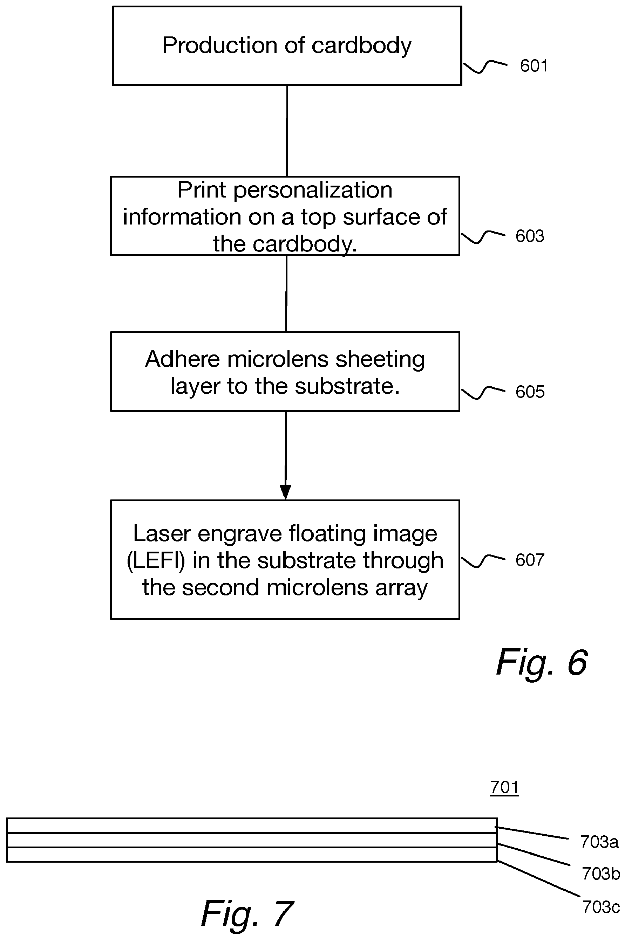

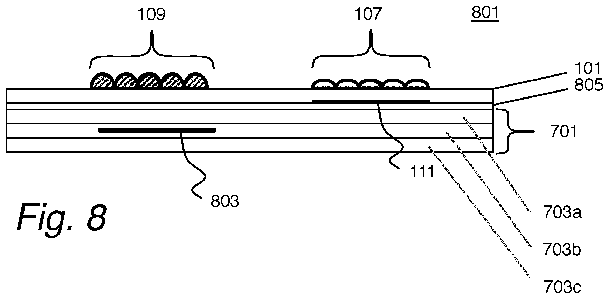

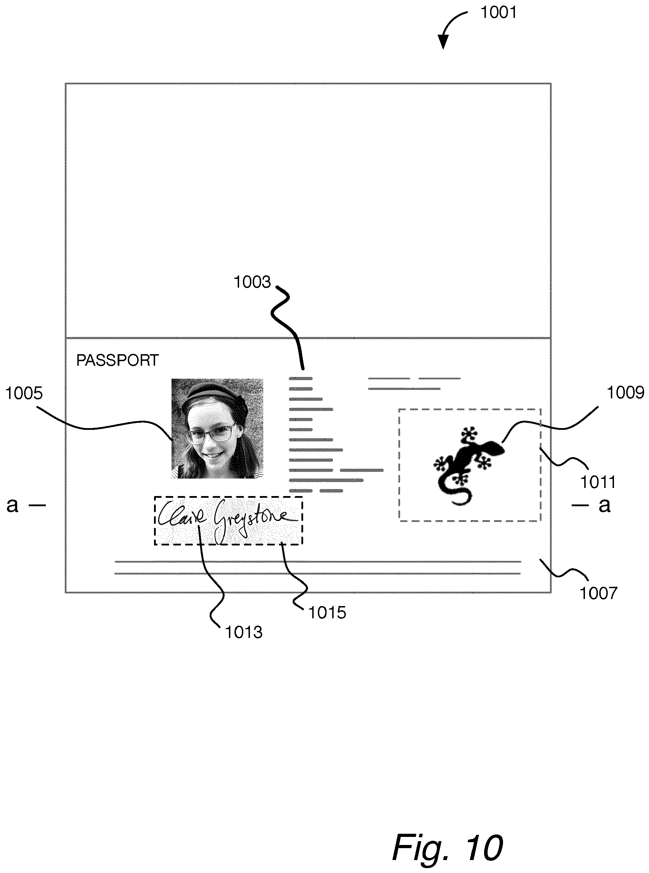

FIG. 6 is a process-flow diagram illustrating the steps in making a security document 801 (illustrated in cross-section in FIG. 8 and, in an example embodiment, in planview in FIG. 10) using the microlens sheeting 101 and containing at least two microimage arrays that produce different composite images.

First, during a manufacturing phase, security document blanks, e.g., a security document substrate 701 as illustrated in cross-section in FIG. 7, are produced which each contains non-personal features of the security document, step 601. The substrate 701 may contain one or more layers 703a-c. At least one layer is a radiation sensitive layer that may be altered by exposure to a controlled laser. Suitable materials for the substrate 701 include polycarbonate, doped polycarbonate, doped polyvinyl chloride (PVC), doped Polyethylene terephthalate glycol-modified (PETG), and similar compounds.

Alternatively, a separate laser-sensitive material may be included into the layer stack 701 at the focal depth of the second microlens array 109, for example, as a patch attached to the top of the stack 701.

Next, some personalization information, e.g., a photograph and biographical data, is printed on a substrate, e.g., using dye diffusion thermal transfer (D2T2), step 603. The substrate may include other security features, such as corporate or national logos, holograms, and electronics.

Next, a microlens sheeting 101 is placed on top of the substrate and adhered to the substrate, for example, with an adhesive layer 113, step 605. As noted above, the microlens sheeting 101 contains at least two different microlens arrays 107 and 109 that have different focal planes. Furthermore, a microimage array 111 is located beneath the microlens array 107 at the focal plane of the microlens array 107. Thus, at the point of placing the microlens sheeting 101 on the substrate 701, the security document contains two different microlens arrays 107 and 109, one microimage array 111 at the focal length of the lenses of the first microlens array 107, and a radiation sensitive substrate 701.

Finally, a second floating composite image is produced in the area of the second microlens array 109 by laser engraving a microimage array into a radiation sensitive material of the substrate 701, step 607. The mechanisms for producing laser engraved floating images is described in U.S. Pat. No. 6,288,842, "Sheeting with composite image that floats," to Florczak et al., incorporated herein by reference.

FIG. 8 is a cross section view of a security document 801 produced using the process of FIG. 6. The microlens layer 101 contains two microlens arrays 107 and 109, respectively. The focal lengths of the lenses of the two microlens arrays 107 and 109 focus on different focal planes, respectively. Accordingly, the microimage array 111 is located below the microlens layer 801 and above substrate 701 and the microimage array 803 is located on another layer 703c. Furthermore, an adhesive layer 805 may adhere the microlens layer 101 to the substrate 701 and provide some thickness between these layers. In alternative embodiments, there may be additional transparent layers located between the layers in which the microimage arrays 111 and 803 are located.

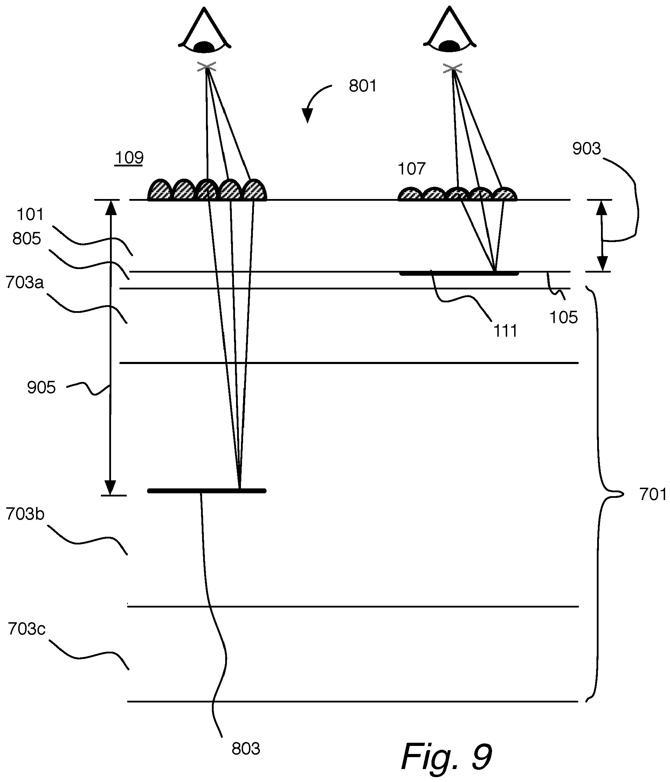

FIG. 9 is an exaggerated view of the cross-section view of illustrating the difference in focal length of lenses of the first microlens array 107 and the second microlens array 109. The focal length 903 of the first microlens array 107 is shorter than the focal length 905 of the second microlens array 109. The first microlens array 107 has a focal length 903 that corresponds to the lower surface 105 whereas the second microlens array 109 has a focal length 905 that reaches beyond the microlens layer 101; in this example, the focal length 905 reaches into the interior of the substrate 701. In an embodiment where the second microimage array 803 is formed on a laser-sensative patch placed on top of the substrate 801, the focal length of the first microlens array 107 and of the second microlens array 109 differ by the thickness of the adhesive layer 805.

In an embodiment wherein the substrate 701 is opaque the typical focal length 905 of the second microlens array would be in a range of 50 to 300µ beyond the microlens layer 101; i.e., the focal length 905 of the second microlens array equals to the focal length 903 of the first microlens array plus an additional 50 to 300µ placing the focal plane of the second microlens array 109 on the surface of the substrate 701 or within a reach of a laser inside the the substrate 501.

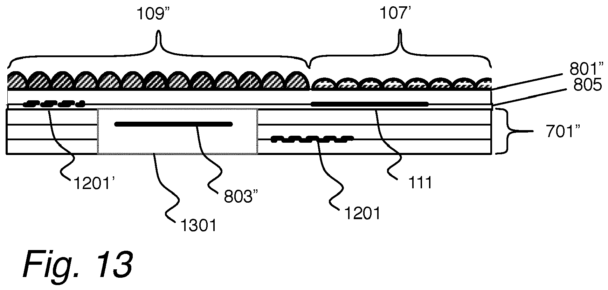

FIG. 13 is a cross-section view of an alternative embodiment of a microlens sheeting 801" placed on a substrate 701" having a transparent window 1301. The translucent window 1301 is typically located under the second microlens array 109' such that a second microimage array 803" may be formed within the translucent window 1301. In an embodiment in which the substrate 701" contains a translucent window 1301, the thickness of the substrate layer is typically up to 900µ. Thus, the focal plane of the second microlens array 109" should be between 50 and 900µ.

FIG. 10 is a schematic illustration of one embodiment of a security document 1001, namely, a passport booklet, corresponding to security document 801 of FIG. 8, and which may be produced using the sequence of FIG. 6. The passport 1001 is typically a booklet filled with several bound pages. One of the pages 1007 usually includes personalized data, often presented as printed indicia or images, which can include biographic data 1003, photographs 1005, signatures, personal alphanumeric information, and barcodes, and allows human or electronic verification that the person presenting the document for inspection is actually the person to whom the passport 1001 is assigned. The personalization information 1005 and 1003 may be the result of the personalization step 603 of FIG. 6.

This same page 1007 of the passport may have a variety of covert and overt security features, such as those security features described in U.S. Pat. No. 7,648,744, "Tamper-Indicating Printable Sheet for Securing Documents of Value and Methods of Making the Same," to Kuo et. al.

In addition, this same page 1007 of the passport 1001 includes at a first integrated image 1009 (here depicted as a gecko) and formed by an array of microlenses 1011 and a corresponding array of microimages (e.g., FIG. 8, microimage array 111, which is the microimage array adhered to the microlens layer 101), which appears to the unaided eye to float either above, below, or within the plane of the security document 1001. This feature is a security feature that is used to verify that the passport is an authentic passport and not a fake one.

For example, when the passport 1001 has been presented to a customs official by an international traveler, the customs official could look at the passport 1001 with his unaided eyes to see if the passport included the appropriate floating image 1009 to verify that the passport was authentic. In the example of FIG. 10, a floating gecko.

While the example of authenticating a passport 1001 is relied upon for illustrative purposes above in conjunction with the description of a security document having two microlens arrays with different focal lengths and corresponding microimage arrays in different layers, a similar scenario would apply to other instances involving inspection of security documents, such as a security official examining a security document by looking for appropriate floating images or moire images to verify the authenticity of the security document. Thus, depending on the nature of the security document, the first integrated image 1009 may be (for a passport or national ID) an image associated with the issuing country, a company logo (for a company badge), a university mascot (for a student ID), or an arbitrary image that security personnel are trained to associate with authentic documents.

The passport 1001 includes a second integrated image 1013 formed by a second array of microlenses 1015 and a corresponding second array of microimages (See FIG. 8, microimage array 803), which also appears to the unaided eye to float either above, below, or within the plane of the security document 1001. In the example of FIG. 10, the second integrated image 1013 is a piece of personalization data - i.e., data directly associated with the individual passport holder, specifically, the signature of the passport holder - that is produced, for example, by laser engraving a laser-sensitive material through the second array of microlenses 1015.

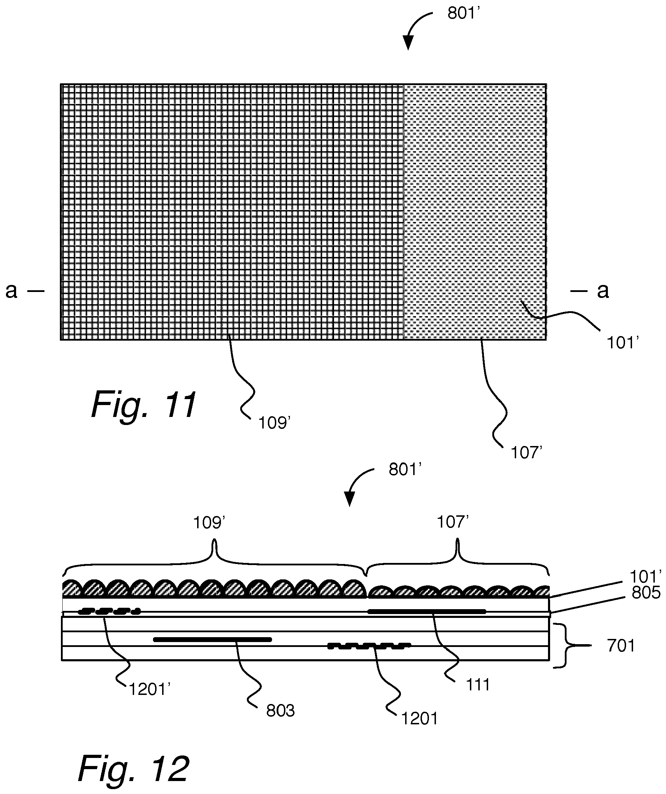

FIGs. 11 and 12 provide a planview and a cross-section view of an alternative embodiment security article 801', respectively. In the embodiment depicted in these figures, the microlens arrays 107' and 109' extend over the entire microlens array layer 101'. Such extension of the microlens arrays 107' and 109' over areas that are not above microimage arrays, for example, over the personalization graphics 1005 and 1003, is advantageous in that the microlenses hinder alteration of those graphics or other security features of a security document 801.

Furthermore, the microlens sheeting 801 (FIG. 8) and microlens sheeting 801' (FIGs. 11 and 12) may contain additional security elements 1201 and 1201' (not illustrated in FIG. 8). These additional security elements may be located on the lower surface of the microlens layer 101', i.e., on the same surface as the first microimage array 111 or between layers in the manner of additional security element 1201', e.g., on a surface more proximal to the microlens layer 101' or on a surface of an additional layer distal to the microlens layer 101' but adjacent to a more distal additional layer in the manner of additional security element 1201.

The microimage arrays 111 and 803 may be created using different methodologies.

In an embodiment, the microimage array 111 is generally associated with a run of security documents, e.g., all passports for a country or all company badges for a company. Therefore, the microimage array 111 is advantageously produced during a manufacturing phase before personalization of individual personal security documents. U.S. Pat. No. 6,288,842, "Sheeting with composite image that floats," to Florczak et al. discloses that floating images on microlens sheeting are created as a result of a compositional change, a removal or ablation of the material, a phase change, or a polymerization of the coating disposed adjacent to one side of the microlens layer or layers. U.S. Pat. No. 7,981,499, "METHODS OF FORMING SHEETING WITH A COMPOSITE IMAGE THAT FLOATS AND SHEETING WITH A COMPOSITE IMAGE THAT FLOATS," to Endle, et al. describes a method for creating floating images on a microlens sheeting by addition of material on the microlens sheeting using a laser process. These patents are incorporated herein by reference. As noted above, Rolling Optics AB provides a technology in which a high-accuracy microimage array is microprinted on a foil on which a microlens array is produced on the opposite surface. These techniques are examples of technologies suitable for producing a microimage array 803 and placing it in registry with a microlens array 109.

The microimage array 803 contains, in a preferred embodiment, an integrated image that is a personalization image, e.g., a signature, as depicted in the second integrated image 1013 of the microimage array 803 is therefore, in a preferred embodiment, produced as a laser-engraved floating image, e.g., as described in Dunn et al. (U.S. Pat. Publ. 2013-0154250 A1), the microimage array 803 is laser engraved through the microlens array 109.

Although specific embodiments of the invention have been described and illustrated, the invention is not to be limited to the specific forms or arrangements of parts so described and illustrated. The invention is limited only by the claims.

## Claims

1. A transparent microlens sheeting, comprising:
at least one transparent layer collectively forming a stack of layers having a first broad face and a second broad face opposite to the first broad face located on a bottom layer of the stack of layers, the stack of layers comprising one or more layers including:
a first transparent layer being a layer of microlenses;
the layer of microlenses located on the first broad face of the transparent microlens sheeting and containing a first microlens array and a second microlens array on the first broad face of the transparent microlens sheeting, wherein the first microlens array has a focal plane essentially coplanar to the second broad face and the second microlens array has a focal plane that lies beyond the transparent microlens sheeting; and
a first microimage array comprising a plurality of individual at least partially complete images located on the second broad face of the transparent microlens sheeting and associated with each of a plurality of the microlenses of said first microlens array, whereby a composite image, provided by the individual images, appears to the unaided eye to be floating above or below the sheeting, or both when the first microimage array is viewed through first microlens array.

2. The transparent microlens sheeting of Claim 1 wherein the transparent microlens sheeting contains one layer and the microlens layer and the bottom layer are the same layer.

3. The transparent microlens sheeting of any previous Claim, wherein the focal plane of the second microlens array lies at least 50µ beyond the layer of microlenses.

4. The transparent microlens sheeting of Claim 3, wherein the focal plane of the second microlens array lies up to 900µ beyond the layer of microlenses.

5. The transparent microlens sheeting of any previous Claim, wherein the first microimage array is printed on the second surface of the microlens layer aligned with the first microlens array.

6. The transparent microlens sheeting of any previous Claim further comprising at least one additional security element on said second surface of the microlens layer, the additional security element being a diffractive security element or a printed security element.

7. The transparent microlens sheeting of any previous Claim, further comprising at least one additional material layer having a surface proximal to the microlens layer, a surface distal to the microlens layer, and containing at least one security element.

8. The transparent microlens sheeting of Claim 7 wherein the at least one security element is a diffractive security element located on a proximal surface of a microlens layer or located on a distal surface of a first of said at least one additional material layer adjacent to the proximal surface of a second of said at least one additional material layers thereby locating said diffractive security element internal to said microlens sheeting.

9. The transparent microlens sheeting of Claim 7 wherein the at least one security element is a printed security element located on a proximal surface of a microlens layer or located on a distal surface of a first of said at least one additional material layer adjacent to the proximal surface of a second of said at least one additional material layers thereby locating said printed security element internal to said microlens sheeting.

10. The transparent microlens sheeting of any previous Claim, further comprising an adhesive layer located on the second broad face whereby the sheeting may be adhered to a substrate.

11. The transparent microlens sheeting of any previous Claim, wherein the first microlens array covers a first portion of the first broad face of the layer of microlenses and the second microlens array covers all other areas of the first broad face of the layer of microlenses.

12. A method for producing a security article, the method comprising:
printing personalization information on a substrate having a top surface and at least one radiation sensitive layer located within the substrate;
placing a transparent microlens sheeting on the substrate such that a second broad face of the microlens layer is located proximate to a top surface of the substrate, wherein the transparent microlens sheeting has:
at least one transparent layer collectively forming a stack of layers having a first broad face and a second broad face opposite to the first broad face and located on a bottom layer of the stack of layers, the stack of layers comprising one or more layers including:
a first transparent layer being a layer of microlenses;
the layer of microlenses located on the first broad face of the transparent microlens sheeting and containing a first microlens array and a second microlens array on the first broad face of the transparent microlens sheeting, wherein the first microlens array has a focal plane essentially coplanar to the second broad face and the second microlens array has a focal plane that lies beyond the transparent microlens sheeting; and
a first microimage array comprising a plurality of individual at least partially complete images located on the second broad face of the transparent microlens sheeting and associated with each of a plurality of the microlenses of said first microlens array, whereby a composite image, provided by the individual images, appears to the unaided eye to be floating above or below the sheeting, or both when the first microimage array is viewed through first microlens array; and
laser engraving a second microimage array through the second microlens array onto the radiation sensitive material such that the second microimage array comprises a plurality of individual at least partially complete images located on the second focal plane and associated with each of a plurality of the microlenses of said second microlens array, whereby a second composite image, provided by the individual images of the second microimage array, appears to the unaided eye to be floating above or below the sheeting, or both when the second microimage array is viewed through the second microlens array.

13. The method of Claim 12, wherein the focal plane of the second microlens array lies at least 50µ beyond the layer of microlenses.

14. The method of any previous Claim 12 to 13, wherein the focal plane of the second microlens array lies up to 900µ beyond the layer of microlenses.

15. The method of any previous Claim 12 to 14, wherein the substrate contains a transparent window and the step of placing the transparent microlens sheeting on the substrate comprises placing the second microlens array over the transparent window and wherein the focal plane of the second microlens array lies between 50µ and 900µ beyond the layer of microlenses.

16. The method of any previous Claim 12 to 15, wherein the substrate is opaque and wherein the focal plane of the second microlens array lies between 50µ and 300µ beyond the layer of microlenses.

17. The method of any previous Claim 12 to 16, wherein the step of placing the first microimage under the first portion of the translucent layer precedes placing the first translucent microlens layer over the substrate and is performed by microprinting the first microimage array on a first broad face of the translucent layer.

18. The method of Claim 12, wherein the step of placing the first microimage under the first portion of the translucent layer follows placing the first translucent layer over the substrate and is performed by laser engraving the first microimage array on the bottom broad face of the translucent layer through the first microlens array.

19. A security article, comprising:
a first translucent layer having a top surface and a bottom surface, the first translucent layer laminated together with at least one other layer including a substrate, the first translucent layer having, located on the top surface:
a first microlens array having a first focal plane substantially equal to the bottom surface;
a second microlens array having a second focal plane located within the at least one other layer;
a first microimage array placed on the bottom surface; and
a second microimage array placed in the at least one other layer at said second focal plane.

20. The security article of Claim 19, wherein the first microimage array is microprinted onto the bottom surface of the translucent layer.

21. The security article of any previous Claim 19 to,20 wherein the first microimage array is laser engraved onto the bottom surface of the translucent layer through the first microlens array.

22. The security article of any of Claims 19 through 21 comprising at least one other material layer between the substrate and the translucent microlens layer wherein second microimage array is laser engraved in the at least one other layer through the second lens array.
